# EUROPEAN PATENT APPLICATION

(11) **EP 4 257 643 A1**
(43) Date of publication of application: **11.10.2023**
(21) Application number: 21900810.9
(22) Date of filing: 25.10.2021
(51) Int. Cl.: C09C 1/36, C09C 1/64

(54) **PIGMENT COMPOSITION COMPRISING PLATE-SHAPED ALUMINUM HAVING EXCELLENT EXPLOSION STABILITY, AND METHOD FOR PREPARING SAME**

(30) Priority: 03.12.2020 KR 20200167192
(71) Applicant: Cqv Co., Ltd., Jincheon-gun, Chungcheongbuk-do 27845 (KR)
(72) Inventor: LEE, Nam-Il, Jincheon-gun, Chungcheongbuk-do 27871 (KR); KIM, Min-Jae, Jincheon-gun, Chungcheongbuk-do 27871 (KR); HAN, Jang-Hun, Incheon 22762 (KR); JANG, Yun-Seok, Ansan-si, Gyeonggi-do 15622 (KR); SHIN, Dae-Ho, Jincheon-gun, Chungcheongbuk-do 27855 (KR); CHO, Kum-Sung, Eumseong-gun, Chungcheongbuk-do 27735 (KR); CHANG, Kil-Wan, Cheongju-si, Chungcheongbuk-do 28162 (KR); LIM, Kwang-Soo, Cheongju-si, Chungcheongbuk-do 28315 (KR); CHOI, Byung-Ki, Cheongju-si, Chungcheongbuk-do 28123 (KR); KANG, Kwang-Choong, Jincheon-gun, Chungcheongbuk-do 27872 (KR)
(74) Representative: Plasseraud IP
(86) International application number: PCT/KR2021/015051
(87) International publication number: WO 2022/119122

(57) **Abstract**

The present disclosure relates to a pigment composition containing plate-shaped aluminum having excellent explosion stability and a method for preparing the same, more specifically, to a pigment composition containing aluminum flakes coated with a plurality of metal oxide layers and TiO₂ coated with a metal oxide layer, thus having explosion stability, and a method for preparing the same. The pigment composition according to the present disclosure, which is prepared by mixing with TiO₂ coated with a metal oxide layer having lower apparent specific gravity as compared to other plate-shaped inorganic particles, can have stability against a thermite reaction by aluminum and metal oxides while preventing deterioration of saturation and opacity.

## Description

### [Technical Field]

The present disclosure relates to a pigment composition containing plate-shaped aluminum having excellent explosion stability, a method for preparing the same and a use thereof, more specifically to a pigment composition containing aluminum flakes coated with a plurality of metal oxide layers and TiO₂ coated with a metal oxide layer and thus having explosion stability, a method for preparing the same and a use thereof. This application claims priority based on Korean Patent Application No. 10-2020-0167192 filed on December 3, 2020, the contents of which in their entirety are herein incorporated by reference.

### [Background Art]

Pearlescent pigments collectively refer to pigments that exhibit special color and luster with pearlescent, rainbow and metallic effects using optical characteristics and refraction by materials. Whereas ordinary pigments exhibit specific colors, the pearlescent pigments exhibit various colors varying depending on viewing angles. Therefore, they are being researched and developed consistently due to applicability to a variety of industrial fields. They can exhibit rainbow colors like natural pearls or metallic lusters due to difference in the refractive indices of media. A variety of metal oxides such as titanium dioxide, iron oxide, silicon dioxide, etc. are being used to realize various colors and lusters.

But, if aluminum is included in the metal substrate of a pigment, there is a risk of a thermite reaction. Because the thermite reaction is an exothermic chemical reaction between aluminum and other metal oxides, it is necessary to prevent the reaction.

Korean Patent Registration No. 2107608 describes a process of coating a metal oxide by mixing with nonmetallic microparticles in a waterborne coating step. However, there is a problem that it is difficult to obtain uniform color due to the difference in specific gravity, specific surface area, etc. of nonmetallic microparticles and metal flakes.

### [References of Related Art]

### [Patent Documents]

(Patent document 1) Korean Patent Registration No. 10-2107608.

### [Disclosure]

### [Technical Problem]

The inventors of the present disclosure have made efforts to prepare a pigment composition which exhibits stability against explosion by a thermite reaction of aluminum and metal oxides. As a result, they have found out that a pigment composition having improved explosion stability while maintaining saturation and opacity can be obtained by mixing aluminum flakes coated with a plurality of metal oxide layers and TiO₂ coated with a metal oxide layer, and have completed the present disclosure.

### [Technical Solution]

The present disclosure provides a pigment composition with improved explosion stability, which contains: aluminum flakes coated with a plurality of metal oxide layers; and TiO₂ coated with a metal oxide layer.

The TiO₂ may have an average diameter of 1-150 µm and a thickness of 10-500 nm.

The TiO₂ may have a hollow space inside thereof.

The aluminum flake may be sequentially coated with a first oxide layer containing a metal oxide with a refractive index of 1.8 or lower and a second oxide layer containing a metal oxide with a refractive index of 1.8 or higher.

The metal oxide may be one or more selected from Fe₂O₃, SnO₂, ZrO₂, SiO₂, MgO·₂, MgO·₂O₃, K₂O·₂, MnO and Mg₂SiO₄.

The metal oxide layer coating the TiO₂ may contain Fe₂O₃.

The aluminum flake and the TiO₂ may be mixed at a weight ratio of 1 : 9 to 7 : 3.

The pigment composition may be used for industrial coating, varnish, automotive coating, powder coating, printing ink or cosmetics.

The present disclosure also provides a method for preparing a pigment composition, which includes:
a step of obtaining coated aluminum flakes by coating aluminum flakes sequentially with a first oxide layer and a second oxide layer;
a step of coating plate-shaped flakes with TiO₂;
a step of obtaining plate-shaped TiO₂ particles with the plate-shaped flakes removed by treating the TiO₂-coated plate-shaped flakes with an acid and an alkali;
a step of obtaining coated plate-shaped TiO₂ particles by coating a metal oxide on the surface of the plate-shaped TiO₂ particles; and
a step of mixing the coated aluminum flakes and the coated plate-shaped TiO₂ particles.

The coated plate-shaped TiO₂ particles may be obtained by coating a metal oxide comprising Fe₂O₃ on the surface of the plate-shaped TiO₂ particles.

The coated aluminum flake and the coated plate-shaped TiO₂ particles may be mixed in dry state.

### [Advantageous Effects]

A pigment composition according to the present disclosure, which is prepared by mixing with TiO₂ coated with a metal oxide layer having lower apparent specific gravity as compared to other plate-shaped inorganic particles, can have stability against a thermite reaction by aluminum and metal oxides while preventing deterioration of saturation and opacity.

### [Best Mode]

Hereinafter, the present disclosure will be described in detail. The terms or words used in the specification and claims should not be interpreted restrictively as ordinary or dictionary meanings, but should be interpreted as meanings and concepts confirming to the inventive concept on the basis of the principle that an inventor can properly define the concept of a term to explain his/her own invention in the best way. Accordingly, the exemplary embodiments described in the specification are merely specific exemplary embodiments of the present disclosure rather than representing all the inventive concept of the present disclosure and, therefore, it should be understood that there may be various equivalents and modifications that can replace them at the time of the filing of this application.

A pigment composition of the present disclosure contains aluminum flakes coated with a plurality of metal oxide layers and TiO₂ coated with a metal oxide layer.

The TiO₂ may be plate-shaped and may have hollow space inside thereof, although not being limited thereto. When the TiO₂ has hollow space, the same explosion stability can be ensured even at a lower mixing ratio as compared to other plate-shaped inorganic pigments because of smaller weight and lower apparent specific gravity.

The TiO₂ may have an average diameter of 1-150 µm and a thickness of 10-500 nm. When the TiO₂ has hollow space, the thickness means the thickness of the material itself except the hollow space.

In addition, the TiO₂ may exhibit different interference colors depending on thickness. Specifically, the TiO₂ may exhibit white interference color when the thickness is 30-70 nm thickness, gold interference color when the thickness is 70-100 nm, red interference color when the thickness is 100-120 nm, violet interference color when the thickness is 120-140 nm, blue interference color when the thickness is 140-160 nm, and green interference color when the thickness is 170-190 nm.

A metal oxide layer is coated on the surface of the TiO₂. The metal oxide may include one or more selected from Fe₂O₃, SnO₂, ZrO₂, SiO₂, MgO·₂, MgO·₂O₃, K₂O·₂, MnO and Mg₂SiO₄, specifically Fe₂O₃.

The metal oxide may be included in an amount of 10-100 parts by weight, specifically 20-80 parts by weight, more specifically 25-50 parts by weight, most specifically 25-35 parts by weight, based on 100 parts by weight of the TiO₂.

In addition, a plurality of metal oxide layers are coated on the surface of the aluminum flakes. The aluminum flake may have an average diameter of 1-150 µm and a thickness of 10-500 nm.

The aluminum flake may be sequentially coated with a first oxide layer containing a metal oxide with a refractive index of 1.8 or lower and a second oxide layer containing a metal oxide with a refractive index of 1.8 or higher. Specifically, the metal oxide contained in the first oxide layer may be SiO₂ and the metal oxide contained in the second oxide layer may be Fe₂O₃, although not being limited thereto.

In the pigment composition of the present disclosure, the aluminum flakes coated with a plurality of metal oxide layers and the TiO₂ coated with a metal oxide layer may be mixed at a weight ratio of 1 : 9 to 7 : 3, specifically 3 : 7 to 6 : 4, most specifically 4 : 6 to 5 : 5.

The pigment composition of the present disclosure may be used for industrial coating, varnish, automotive coating, powder coating, printing ink or cosmetics.

In addition, the present disclosure provides a method for preparing a pigment composition, which includes:
a step of obtaining coated aluminum flakes by coating aluminum flakes sequentially with a first oxide layer and a second oxide layer;
a step of coating plate-shaped flakes with TiO₂;
a step of obtaining plate-shaped TiO₂ particles with the plate-shaped flakes removed by treating the TiO₂-coated plate-shaped flakes with an acid and an alkali;
a step of obtaining coated plate-shaped TiO₂ particles by coating a metal oxide on the surface of the plate-shaped TiO₂ particles; and
a step of mixing the coated aluminum flakes and the coated plate-shaped TiO₂ particles.

First, aluminum flakes are coated sequentially with a first oxide layer and a second oxide layer.

Specifically, the metal oxide contained in the first oxide layer may be SiO₂ and the metal oxide contained in the second oxide layer may be Fe₂O₃.

Specifically, a first passivation layer containing SiO₂ may be formed by adding a Si precursor compound to aluminum flakes in a solvent and stirring the mixture, and then adding an alkaline solution and further stirring the mixture.

As the Si precursor compound, tetraethyl orthosilicate (TEOS), tetramethyl orthosilicate (TMOS), etc. may be used.

Then, a second passivation layer containing Fe₂O₃ may be formed by adding the aluminum flakes with the first passivation layer formed to deionized water, adding a Fe precursor compound, and then stirring and heat-treating the mixture. At this time, pH may be adjusted to 1-5, more specifically to 2-4, by using a pH control agent.

As the Fe precursor compound, FeCl₃, Fe(NO₃)₃, FeSO₄, etc. may be used.

After dehydrating, washing with water and drying the aluminum flakes with the second passivation layer formed, coated aluminum flakes may be prepared as a first component of the pigment composition by heat-treating the same at 200-400 ºC.

Then, plate-shaped flakes are prepared separately and TiO₂ is coated on the surface of the flakes.

Specifically, after suspending the plate-shaped flakes in deionized water and adding a Ti precursor compound and an alkaline solution with pH maintained at 1-5, specifically at 1 .5-2.5, a TiO₂ coating layer may be formed by stirring and sintering the same.

As the Ti precursor compound, TiCl₄, TiOCl₂, Ti(SO₄)₂, Ti(NO₃)₄, etc. may be used.

The plate-shaped flakes may include one or more selected from mica, plate-shaped silica, glass flakes, etc., specifically mica. The plate-shaped flakes may be a powder that has been pulverized and sorted.

Specifically, the plate-shaped flakes may have an average diameter of 1-150 µm. If the average diameter of the plate-shaped flakes is smaller, the squareness ratio of the plate-shaped flakes is decreased when a material is coated on the surface of the plate-shaped flakes as the plate-shaped flakes become rounder. The decrease in the squareness ratio results in light scattering due to diffuse reflection without exhibiting the same color having the same refractive index. Otherwise, if the average diameter of the plate-shaped flakes is larger, it may be difficult to form a coating layer for providing color due to increased surface area.

TiO₂ may be coated on the surface of the plate-shaped flakes. The TiO₂ coating layer may have a thickness of 10-1,000 nm, specifically 50-500 nm, more specifically 100-300 nm.

Next, plate-shaped TiO₂ particles with the plate-shaped flakes removed are obtained by treating the TiO₂-coated plate-shaped flakes with an acid and an alkali.

First, after suspending the TiO₂-coated plate-shaped flakes in deionized water and then treating by adding an acidic solution, the flakes may be washed with water under reflux and then filtered.

More specifically, during the acid treatment, sonication may be performed at 15-40 kHz and 70-110 W while stirring at a rate of 300-500 rpm.

If the stirring rate is below 300 rpm or the sonication power is below 70 W, the stirring may be insufficient. Otherwise, if the stirring rate exceeds 500 rpm or the sonication power exceeds 110 W, it may be difficult to achieve a desired particle size or proceed a post-process due to breakage of particles.

The acidic solution may be any one selected from sulfuric acid, phosphoric acid, nitric acid, etc. or a mixture thereof. Specifically, the acidic solution may be diluted to a concentration of 40-60 wt%. If the concentration of the acidic solution is below the above range, it may be difficult to ensure a hollow structure because the plate-shaped flakes are not dissolved well during the acid treatment. Otherwise, if the concentration of the acidic solution exceeds the above range, the coated TiO₂ coating layer may be dissolved together with the plate-shaped flakes.

In this step, reflux may be performed specifically at 80-120 ºC for 4-6 hours. If the reflux temperature is below 80 ºC or if the reflux time is shorter than 4 hours, a uniform hollow space may not be formed due to insufficient dissolution of the plate-shaped flakes and cracking may occur. Otherwise, if the reflux temperature exceeds 120 ºC or if the reflux time exceeds 6 hours, the TiO₂ coating layer may be broken or separated during stirring.

After the acid treatment, the product may be dehydrated, washed with water and suspended in deionized water. Then, after treating with an alkali by adding an alkaline solution, the product may be refluxed and filtered.

As the alkaline solution, a strong alkaline solution with a concentration of 40-55 wt% may be used. Specifically, one or more selected from sodium hydroxide and potassium hydroxide may be used.

If the concentration of the alkaline solution is below 40 wt%, hollow space may not be formed because the acid-treated TiO₂-coated plate-shaped flakes are not dissolved completely. Otherwise, if the concentration of the alkaline solution exceeds 55 wt%, the coated TiO₂ layer may be dissolved together with the plate-shaped flakes.

The reflux may be performed specifically at 50-70 ºC for 1-3 hours.

Because half or more of the plate-shaped flakes with the TiO₂ coating layer formed are removed by the acid treatment and then the plate-shaped flakes are removed completely by the alkali treatment, it is possible to form a hollow structure.

Plate-shaped TiO₂ particles having a hollow structure with the plate-shaped flakes removed may be obtained by drying the alkali-treated product.

Specifically, the drying may be performed at 100-150 ºC for 10-120 minutes. If the drying temperature is below 100 ºC, economic efficiency and productivity may worsen because the drying time should be increased. Otherwise, if the drying temperature exceeds 150 ºC, aggregation of powder particles may occur.

Next, coated plate-shaped TiO₂ particles are obtained by coating a metal oxide on the surface of the plate-shaped TiO₂ particles.

The metal oxide may include Fe₂O₃. Specifically, after adding a Fe precursor compound to deionized water, a second passivation layer containing Fe₂O₃ may be formed by stirring and heat-treating the same. At this time, pH may be adjusted specifically to 1-5, more specifically to 2-4, using a pH control agent.

As the Fe precursor compound, FeCl₃, Fe(NO₃)₃, FeSO₄, etc. may be used.

After coating the metal oxide including Fe₂O₃ and dehydrating, rinsing with water and drying the same, coated plate-shaped TiO₂ particles may be obtained as a second component of the pigment composition by heat-treating at 500-1 ,000 ºC.

Finally, a pigment composition is obtained by mixing the coated aluminum flakes and the coated plate-shaped TiO₂ particles.

The coated aluminum flakes and the coated plate-shaped TiO₂ particles may be mixed at a weight ratio of 1 : 9 to 7 : 3, specifically 3 : 7 to 6 : 4, most specifically 4 : 6 to 5 : 5. In addition, the coated aluminum flakes and the coated plate-shaped TiO₂ particles may be specifically mixed in dry state.

Hereinafter, the present disclosure is described in detail through examples and test examples. However, the examples according to the present disclosure may be varied into various different forms and it should not be interpreted that the scope of the present disclosure is limited by the examples. The examples of the present disclosure are provided to more fully describe the present disclosure to those having ordinary knowledge in the art.

### Preparation Example 1: Preparation of coated aluminum flakes

A first slurry was prepared by adding 100 g of aluminum flakes having a D₅₀ of 15 µm to 490 g of isopropyl alcohol (IPA). Then, after adding 50 g of tetraethyl orthosilicate (TEOS) to the first slurry, the mixture was stirred at 400 rpm using a 7.5-cm impeller. Then, after heating the first slurry to 50 ºC, 140 g of H₂O and 5 g of 25% ammonia water were added. Then, a first passivation layer formed of silicon oxide was formed by stirring at 50 ºC for about 20 hours, which was dehydrated with IPA, washed with water and then dried.

A second slurry was prepared by adding 30 g of the first passivation layer-coated aluminum flakes to 300 g of purified water and stirring at 400 rpm using a 7.5-cm impeller. Then, after heating to 75 ºC and adjusting pH to 3.0, reflux was performed for 30 minutes. Then, a FeCl₃ aqueous solution was added while maintaining the pH at 3.0. The pH was maintained using caustic soda. The addition of the FeCl₃ aqueous solution was stopped when the color of the solution changed from bronze color to gold color. Then, coated aluminum flakes were obtained by heat-treating the powder obtained through dehydration, washing with water and drying at 300 ºC for 1 hour.

### Preparation Example 2: Preparation of coated plate-shaped TiO₂ particles with hollow structure

First, after suspending 100 g of mica particles in 2 L of deionized water, 40 wt% TiOCl₂ and sodium hydroxide solutions were added at the same time at 80 ºC while maintaining pH at 1.5. Through this, a TiO(OH)₂ coating layer was formed on the surface of the mica particles. The addition of the TiOCl₂ and sodium hydroxide solutions was stopped when the desired interference color was obtained. Then, after stirring for 10 minutes or longer, washing and then drying, a TiO₂ coating layer was formed on the surface of the mica particles by sintering at 850 ºC.

Then, plate-shaped TiO₂ particles were prepared by treating with an acid and an alkali. First, a reactor equipped with a condenser was stirred at 400 rpm while adding 400 mL of sulfuric acid. Then, after conducting reflux at 100 ºC for 6 hours, followed by cooling, 800 mL of water was added and reflux was performed again. Then, after filtering using filter paper, the particles were washed four times with 1000 mL of water. Then, after adding the acid-treated powder in a 3-L flask and adding 800 mL of deionized water, a suspension was obtained by stirring at a rate of 400 rpm. Then, after adding 400 mL of a 50 wt% sodium hydroxide aqueous solution, reflux was conducted at 60 ºC for 4 hours. Then, after filtering using filter paper and washing four times with 800 mL of water, hollow plate-shaped TiO₂ particles were prepared by drying at 120 ºC.

After forming a slurry by adding 30 g of the hollow plate-shaped TiO₂ particles to 500 g of purified water, stirring was performed at 400 rpm using a 7.5-cm impeller. Then, after heating to 75 ºC and adjusting pH to 3.0, reflux was performed for 30 minutes. Then, a FeCl₃ aqueous solution was added while maintaining the pH at 3.0. The pH was maintained using caustic soda. The addition of the FeCl₃ aqueous solution was stopped when the color of the solution was changed to gold. Then, after dehydration, washing with water and then drying, the obtained powder was heat-treated at 800 ºC for 1 hour to obtain coated plate-shaped TiO₂ particles with hollow structure.

### Example 1: Preparation of pigment composition

A pigment composition was prepared by mixing the coated aluminum flakes prepared in Preparation Example 1 and the coated plate-shaped TiO₂ particles prepared in Preparation Example 2.

### Test Example 1: Confirmation of explosion stability

For the pigment composition of Example 1, explosive power was measured while varying the mixing ratio of the coated aluminum flakes and the coated plate-shaped TiO₂ particles with hollow structure. The result is shown in Table 1.

The explosive power was measured after inducing a thermite reaction by contacting 3 g of the powder directly with flame. The explosive power was determined as a relative value to that of the coated aluminum flakes alone as 100 %.

**[Table 1]**

| | | Mixing ratio (wt%) | | | | | | | | | | |
|---|---|---|---|---|---|---|---|---|---|---|---|---|
| Components | Coated aluminum flakes | 0% | 10% | 20% | 30% | 40% | 50% | 60% | 70% | 80% | 90% | 100% |
| | Coated plate-shaped TiO₂ particles with hollow structure | 100% | 90% | 80% | 70% | 60% | 50% | 40% | 30% | 20% | 10% | 0% |
| Explosive power | | 0 | 1 | 1 | 1 | 1 | 1 | 3 | 5 | 6 | 8 | 10 |

As shown in Table 1, the explosive power was maintained low until the weight ratio of the coated aluminum flakes and the coated plate-shaped TiO₂ particles was 5 : 5, but the explosive power was increased as the weight ratio of the coated plate-shaped TiO₂ particles was increased.

In addition, explosive power was measured by mixing the coated aluminum flakes with synthetic mica or metal oxide-coated TiO₂ particles. The result is shown in Tables 2-4.

The synthetic mica used for comparison was plate-shaped synthetic mica having a D₅₀ of about 20 µm and a thickness of about 500 nm.

TiO₂-coated synthetic mica was prepared by diluting the synthetic mica with purified water to 10 wt% and maintaining pH at 1.8 using TiOCl₂ and sodium hydroxide at 70 ºC until gold color was developed, which was then dehydrated, washed with water and then heat-treated.

Fe₂O₃-coated synthetic mica was prepared by diluting the synthetic mica with purified water to 10 wt% and maintaining pH at 3.0 using FeCl₃ and sodium hydroxide at 70 ºC until bronze color was developed, which was then dehydrated, washed with water and then heat-treated.

**[Table 2]**

| | | Mixing ratio (wt%) | | | | | | | | | | |
|---|---|---|---|---|---|---|---|---|---|---|---|---|
| Components | Coated aluminum flakes | 0% | 10% | 20% | 30% | 40% | 50% | 60% | 70% | 80% | 90% | 100% |
| | Synthetic mica | 100% | 90% | 80% | 70% | 60% | 50% | 40% | 30% | 20% | 10% | 0% |
| Explosive power | | 0 | 1 | 1 | 3 | 4 | 5 | 6 | 7 | 8 | 9 | 10 |

**[Table 3]**

| | | Mixing ratio (wt%) | | | | | | | | | | |
|---|---|---|---|---|---|---|---|---|---|---|---|---|
| Components | Coated aluminum flakes | 0% | 10% | 20% | 30% | 40% | 50% | 60% | 70% | 80% | 90% | 100% |
| | TiO₂-coated synthetic mica | 100% | 90% | 80% | 70% | 60% | 50% | 40% | 30% | 20% | 10% | 0% |
| Explosive power | | 0 | 1 | 1 | 3 | 5 | 6 | 7 | 8 | 9 | 9 | 10 |

**[Table 4]**

| | | Mixing ratio (wt%) | | | | | | | | | | |
|---|---|---|---|---|---|---|---|---|---|---|---|---|
| Components | Coated aluminum flakes | 0% | 10% | 20% | 30% | 40% | 50% | 60% | 70% | 80% | 90% | 100% |
| | Fe₂O₃-coated synthetic mica | 100% | 90% | 80% | 70% | 60% | 50% | 40% | 30% | 20% | 10% | 0% |
| Explosive power | | 0 | 1 | 1 | 3 | 5 | 6 | 7 | 8 | 9 | 9 | 10 |

As shown in Tables 2-4, the explosive power was maintained high when the aluminum flakes were mixed with general inorganic particles. Therefore, it can be seen that the pigment composition of the present disclosure has relatively superior explosion stability.

### Test Example 2: Confirmation of saturation and opacity of pigment composition

Because it was confirmed above that explosion stability is ensured when the pigment composition of the present disclosure contains the coated aluminum flakes and the coated plate-shaped TiO₂ particles at a weight ratio of 5 : 5, saturation and opacity were compared with those of the pigment compositions prepared by mixing coated aluminum flakes and other inorganic particles at a weight ratio of 5 : 5. The result is shown in Table 5.

In Table 5, the composition of Example is a mixture of the coated aluminum flakes of Preparation Example 1 and the coated plate-shaped TiO₂ particles of Preparation Example 2 at a weight ratio of 5 : 5.

Also, in Table 5, the composition of Comparative Example 1 is a mixture of the coated aluminum flakes of Preparation Example 1 and synthetic mica particles at a weight ratio of 5 : 5, the composition of Comparative Example 2 is a mixture of the coated aluminum flakes of Preparation Example 1 and TiO₂-coated synthetic mica particles at a weight ratio of 5 : 5, and the composition of Comparative Example 3 is a mixture of the coated aluminum flakes of Preparation Example 1 and Fe₂O₃-coated synthetic mica particles at a weight ratio of 5 : 5.

**[Table 5]**

| | C* | | | | | | dC* | | | | | | Opacity |
|---|---|---|---|---|---|---|---|---|---|---|---|---|---|
| Angle (º) | -15 | 15 | 25 | 45 | 75 | 110 | -15 | 15 | 25 | 45 | 75 | 110 | |
| Prep. Ex. 1 | 118.28 | 120.28 | 92.63 | 53.45 | 35.89 | 30.32 | | | | | | | 98.6 |
| Ex. | 103.52 | 102.34 | 78.61 | 47.11 | 33.72 | 30.53 | -8.31 | -10.66 | -6.25 | -1.35 | -0.58 | 1.15 | 93.2 |
| Comp. Ex.1 | 111.08 | 111.69 | 84.47 | 47.82 | 32.66 | 29.3 | -8.61 | -9.15 | -6.45 | -4.17 | -4.16 | -4.35 | 80.8 |
| Comp. Ex.2 | 103.26 | 104.47 | 79.99 | 44.45 | 26.63 | 21.94 | -15.04 | -15.89 | -12.68 | -8.86 | -9.32 | -8.37 | 84.7 |
| Comp. Ex.3 | 92.84 | 91.2 | 70.97 | 43.27 | 30.98 | 27.12 | -25.47 | -29.15 | -21.7 | -10.04 | -4.97 | -3.19 | 91.4 |

In Table 5, C* indicates saturation and dC* indicates the difference in saturation from that of the coated aluminum flakes of Preparation Example 1.

As shown in Table 5, the pigment composition of Example exhibited superior saturation and opacity as compared to other pigment compositions.

## Claims

1. A pigment composition with improved explosion stability, comprising:
aluminum flakes coated with a plurality of metal oxide layers; and
TiO₂ coated with a metal oxide layer.

2. The pigment composition according to claim 1, wherein the TiO₂ has an average diameter of 1-150 µm and a thickness of 10-500 nm.

3. The pigment composition according to claim 1, wherein the TiO₂ has a hollow space inside thereof.

4. The pigment composition according to claim 1, wherein the aluminum flake is sequentially coated with a first oxide layer comprising a metal oxide with a refractive index of 1.8 or lower and a second oxide layer comprising a metal oxide with a refractive index of 1.8 or higher.

5. The pigment composition according to claim 1, wherein the metal oxide is one or more selected from Fe₂O₃, SnO₂, ZrO₂, SiO₂, MgO·₂, MgO·₂O₃, K₂O·₂, MnO and Mg₂SiO₄.

6. The pigment composition according to claim 1, wherein the metal oxide layer coating the TiO₂ comprises Fe₂O₃.

7. The pigment composition according to claim 1, wherein the aluminum flake and the TiO₂ are mixed at a weight ratio of 1 : 9 to 7 : 3.

8. The pigment composition according to claim 1, which is used for industrial coating, varnish, automotive coating, powder coating, printing ink or cosmetics.

9. A method for preparing a pigment composition, comprising:
a step of obtaining coated aluminum flakes by coating aluminum flakes sequentially with a first oxide layer and a second oxide layer;
a step of coating plate-shaped flakes with TiO₂;
a step of obtaining plate-shaped TiO₂ particles with the plate-shaped flakes removed by treating the TiO₂-coated plate-shaped flakes with an acid and an alkali;
a step of obtaining coated plate-shaped TiO₂ particles by coating a metal oxide on the surface of the plate-shaped TiO₂ particles; and
a step of mixing the coated aluminum flakes and the coated plate-shaped TiO₂ particles.

10. The method for preparing a pigment composition according to claim 9, wherein the coated plate-shaped TiO₂ particles are obtained by coating a metal oxide comprising Fe₂O₃ on the surface of the plate-shaped TiO₂ particles.

11. The method for preparing a pigment composition according to claim 9, wherein the coated aluminum flake and the coated plate-shaped TiO₂ particles are mixed in dry state.
